# EUROPÄISCHE PATENTSCHRIFT

(11) **EP 1 752 792 B1**
(45) Veröffentlichungstag und Bekanntmachung des Hinweises auf die Patenterteilung: **12.12.2007**
(21) Anmeldenummer: 05017444.0
(22) Anmeldetag: 11.08.2005
(51) Int. Cl.: G01S 13/88, H01P 5/103, G01S 7/00

(54) **Abstandsmessvorrichtung mit einer Mikrowellen-Antennenanordnung**
Distance measurement device using a Microwave-Antenna
Système de mesure de la distance utilisant une antenne micro-ondes

(43) Veröffentlichungstag der Anmeldung: 14.02.2007
(73) Patentinhaber: Festo AG & Co., 73734 Esslingen (DE)
(72) Erfinder: Maier, Marcus, 70565 Stuttgart (DE); Reininger, Thomas, Dr. rer. nat., 73249 Wernau (DE)
(74) Vertreter: Bregenzer, Michael

(56) Entgegenhaltungen:
- DE-A1- 10 205 904
- DE-A1- 19 903 183
- FR-A- 820 721
- WANG Y ET AL: "ACCURATE GLOBAL SOLUTIONS OF EM BOUNDARY-VALUE PROBLEMS FOR COAXIAL RADIATORS" IEEE TRANSACTIONS ON ANTENNAS AND PROPAGATION, IEEE INC. NEW YORK, US, Bd. 42, Nr. 5, 1. Mai 1994 (1994-05-01), Seiten 767-770, XP000456905 ISSN: 0018-926X
- PATENT ABSTRACTS OF JAPAN Bd. 1999, Nr. 02, 26. Februar 1999 (1999-02-26) -& JP 10 300604 A (MATSUSHITA ELECTRIC WORKS LTD), 13. November 1998 (1998-11-13)
- PATENT ABSTRACTS OF JAPAN Bd. 1999, Nr. 05, 31. Mai 1999 (1999-05-31) -& JP 11 030553 A (TERUMO CORP), 2. Februar 1999 (1999-02-02)

## Beschreibung

Die Erfindung betrifft eine Positionsmessvorrichtung zur Bestimmung einer Position eines in einer Leitungsstruktur angeordneten Messobjekts anhand von Mikrowellen, mit einer elektrischen Schaltung zum Erzeugen und/oder Empfangen der Mikrowellen und mit einer Mikrowellen-Antennenanordnung zum Senden und/oder Empfangen der Mikrowellen.

Eine derartige Positionsmessvorrichtung ist beispielsweise aus der deutschen Offenlegungsschrift DE 102 05 904 A1 bekannt. Die Leitungsstruktur wird durch ein Gehäuse eines pneumatischen Zylinders oder eines Hydraulikzylinders gebildet, in dem ein Kolben längsbeweglich angeordnet ist. Die Positionsmessvorrichtung dient zur Abstandsmessung des Kolbens bezüglich einer Längs-Endlage, in deren Bereich die Mikrowellen-Antennenanordnung angeordnet ist. Die Mikrowellen-Antennenanordnung enthält eine Koppelsonde, die von einem dielektrischen Haltesystem gehalten wird. Das Gehäuse bzw. die Leitungsstruktur wirkt mit der Koppelsonde bei der Ausbreitung der Mikrowellen zusammen. Es ist daher wesentlich, dass der Abstand der Koppelsonde relativ zu dem Gehäuse konstant ist, das heißt, dass das dielektrische Haltesystem diesen konstanten Abstand gewährleistet.

Die Messgenauigkeit der bekannten Positionsmessvorrichtung hängt davon ab, mit welcher Präzision die Koppelsonde von dem dielektrische Haltesystem gehalten wird, von den Abständen des dielektrischen Haltesystems relativ zu der Leitungsstruktur bzw. dem Gehäuse des Zylinders sowie zudem von den elektrischen Leitungsverbindungen zwischen der Koppelsonde und der elektrischen Schaltung zum Erzeugen bzw. Empfangen der Mikrowellen und den Leitungen zwischen dieser Schaltung und der Leistungsstruktur bzw. dem Zylinder-Gehäuse. Dadurch sind die Anforderungen an die Herstellungsgenauigkeit sehr hoch, wenn man eine ausreichende Messgenauigkeit erzielen will. Aufgrund der mechanischen Belastung, beispielsweise durch Druck, Schwingungen und dergleichen, können sich zudem die Abstände zwischen den einzelnen Bestandteilen der Mikrowellen-Antennenanordnung und/oder der elektrischen Schaltung und/oder der Leitungsstruktur verändern, so dass die Signalqualität der Mikrowellen und letztlich des Positionsmesssignals schlechter werden bis hin zu einem vollständigen Ausfall der Positionsmessvorrichtung.

Es ist daher die Aufgabe der vorliegenden Erfindung, eine Positionsmessvorrichtung mit einem verbesserten Sende- und/oder Empfangsverhalten bereit zu stellen.

Zur Lösung der Aufgabe ist eine Positionsmessvorrichtung gemäß Anspruch 1 vorgesehen.

Die Schaltung enthält beispielsweise einen HF-Sender und/oder einen HF-Empfänger (HF = Hochfrequenz). Ferner kann die Schaltung auch eine Weiche zur Aus- und Einkopplung der HF-Signale von und zur Mikrowellen-Antennenanordnung ausweisen. Die Schaltung ermittelt beispielsweise anhand eines Phasenvergleichs und/oder eine Laufzeitmessung der Mikrowellen eine jeweilige Position des Messobjekts. Das Sende- oder Empfangsverhalten der erfindungsgemäßen Positionsmessvorrichtung wird durch exakte Abstände zwischen den Polflächen sowie den elektrisch leitfähige Flächen und Leiterbahnen der elektrischen Schaltung verbessert.

Die elektrische Schaltung erzeugt die Mikrowellen beispielsweise mit Hilfe von Leiterbahnen, z.B. mäanderförmiger und/oder geradliniger und/oder gebogener Leiterbahnen, sowie anhand von elektrisch leitfähigen Flächen unmittelbar am elektrischen Antennenkörper, der die erste und zweite elektrischleitfähige Polfläche zur Übertragung der Mikrowellen aufweist. "Übertragung" heißt in diesem Zusammenhang, dass die Mikrowellen unmittelbar von dem Antennenkörper in die Leitungsstruktur abgestrahlt werden können. Es kann aber auch ein zusätzlicher Abstrahlkörper vorgesehen sein, der an dem Antennenkörper angeordnet und insbesondere von diesem gehalten wird.

Auch in Empfangsrichtung erweist sich die Erfindung als vorteilhaft, weil nämlich beispielsweise mit Hilfe des vorgenannten Abstrahlkörpers auch Mikrowellen empfangen werden können und unmittelbar an den erfindungsgemäß ausgestalteten Antennenkörper übertragen werden können. Insofern bildet der Abstrahlkörper auch einen Empfangskörper. Der Antennenkörper leitet die aus der Leitungsstruktur empfangenen Mikrowellen unmittelbar der Schaltung zu, die an dem Antennenkörper angeordnet ist. Somit ist auch empfangsseitig ein optimales Verhalten vorhanden.

Es sei betont, dass die erfindungsgemäße Positionsmessvorrichtung eine erfindungsgemäß ausgestaltete Mikrowellen-Antennenanordnung ausschließlich zum Senden von Mikrowellen oder ausschließlich zum Empfangen von Mikrowellen oder zweckmäßigerweise zum Senden und Empfangen der Mikrowellen aufweisen kann.

Die Schaltung enthält zweckmäßigerweise zumindest einen Hochfrequenzteil. Aber auch Niederfrequenzteile der Schaltung sind zweckmäßigerweise zumindest teilweise am erfindungsgemäßen Antennenkörper angeordnet, beispielsweise zur Ermittlung von Positionsmesssignalen in Abhängigkeit von der Position des Messobjekts anhand von Mikrowellensignalen des Hochfrequenzteils, zum leitungsgebundenen oder drahtlosen Senden der Positionsmesssignale und/oder zum Empfangen von Steuerungsanweisungen für die Positionsmessvorrichtung. Vorteilhaft enthält die Schaltungsanordnung eine Busankopplung, insbesondere eine Feldbus-Ankopplung.

Beispielsweise bildet die Positionsmessvorrichtung einen Bestandteil einer Aktorvorrichtung. Die Aktorvorrichtung, z.B. ein elektrischer und/oder fluidtechnischer Antrieb, insbesondere ein pneumatischer Antrieb, hat ein elektrisch leitfähiges Gehäuse, in dem ein Aktorglied, beispielsweise ein Läufer eines elektrischen Motors bzw. ein Kolben eines pneumatischen Antriebs, beweglich, insbesondere linear beweglich, angeordnet ist. Die Positionsmessvorrichtung misst z.B. den Abstand des Aktorglieds von einem Endanschlag.

Das bewegliche Messobjekt, beispielsweise das Ventilglied bzw. das Aktorglied, reflektiert Mikrowellen, die mit Hilfe der Mikrowellen-Antennenanordnung bzw. der Koppelsonde in die Leitungsstruktur bzw. das Gehäuse eingekoppelt werden. Anhand einer Laufzeitmessung und/oder anhand eines Phasenvergleichs zwischen ausgesendeten Mikrowellen und empfangenen Mikrowellen, die beispielsweise einen Frequenzbereich von 10 MHz - 25 GHz haben, ermittelt die Positionsmessvorrichtung einen jeweiligen Abstand des Messobjekts von der Mikrowellen-Antennenanordnung bzw. Koppelsonde. Es versteht sich, dass die Mikrowellen-Antennenanordnung auch zwei Koppelsonden enthalten kann, eine zum Senden und eine zum Empfangen von Mikrowellen. Besonders bevorzugt ist jedoch, wenn nur eine einzige Koppelsonde erforderlich ist.

Die erfindungsgemäße Positionsmessvorrichtung kann aber auch einen Bestandteil eines fluidtechnischen Wartungsgerätes bilden, beispielsweise eines pneumatischen Wartungsgerätes. Die Positionsmessvorrichtung dient dann beispielsweise zur Mengenmessung eines Additivs für das Fluid, beispielsweise eines Öls, das in das Fluid eingespritzt wird, oder zu Messungen eines Ausscheidungsprodukts, das das Wartungsgerät aus dem Fluid extrahiert und in einem Aufnahmeraum deponiert. Die Positionsmessvorrichtung misst den Füllstand des Additivs bzw. des Ausscheidungsprodukts in dem Aufnahmeraum.

Eine weitere Variante der Erfindung kann vorsehen, dass die Positionsmessvorrichtung einen Bestandteil eines Fluidventils bildet, beispielsweise eines pneumatischen Ventils. Das Messobjekt ist in diesem Falle z.B. das Ventilglied des Fluidventils, beispielsweise ein Antriebskolben, mit dem das Ventilglied pneumatisch angetrieben wird.

Der Antennenkörper ist zumindest teilweise als ein dreidimensionaler Leiterkörper ausgestaltet, beispielsweise als MID-Leiterkörper (MID = Moulded Interconnect Device). Die Leiterbahnen und Leitflächen können auf den Antennenkörper beispielsweise aufgeklebt und/oder thermisch aufgebracht und/oder durch eine Beschichtung hergestellt sein. Dabei ist zumindest teilweise ein mehrlagiger Aufbau bevorzugt, so dass der Antennenkörper einen Multilayer-Aufbau hat.

Die Beschichtungen für die Polflächen und/oder für Leiterbahnen und -flächen der elektrischen Schaltung sind beispielsweise aus Kupfer und/oder Nickel und/oder Aluminium und/oder Gold oder einem sonstigen elektrisch leitfähigen Material und kann z.B. durch Galvanisieren und/oder durch ein Bedampfungsverfahren hergestellt werden, beispielsweise ein physikalisches und/oder chemisches Bedampfungsverfahren (PVD = Physical Vapor Deposition / CVD = Chemical Vapor Deposition).

Die elektrisch leitfähigen Polflächen, Leiterbahnen für die Schaltung und dergleichen können auch durch Laserbeschichtung und/oder durch thermisches Beschichten hergestellt sein.

Vorzugsweise wird für den elektrischen Antennenkörper ein Kunststoffmaterial verwendet, das eine geringe Wärmeausdehnung hat. Als zweckmäßig haben sich beispielsweise Polycarbonat-Werkstoffe, z.B. Lexan, Makrolon oder dergleichen, oder flüssigkristalliner Copolyester (Liquid Cristal Polymere = LCP), z.B. Vectra, herausgestellt, der gute Festigkeitseigenschaften und eine niedrige Wärmeausdehnung aufweist.

Die elektrische Schaltung hat zweckmäßigerweise eine mit der ersten Polfläche verbundene erste Hochfrequenz-Leiterstruktur, z.B. mit mäanderförmigen Leiterbahnen, und eine mit der zweiten elektrisch leitfähigen Fläche verbundene zweite Hochfrequenz-Leiterstruktur, mit denen Mikrowellen erzeugt bzw. gesendet und/oder empfangen werden können. Die beiden Leiterstrukturen können koplanar angeordnet sein oder auch in einer sogenannten Mikrostrip-Anordnung, bei der die beiden Leiterstrukturen durch eine Isolationsschicht des Antennenkörpers voneinander isoliert sind. Die Schichtdicke dieser Isolationsschicht hat wesentlichen Einfluß auf das Sende- und/oder Empfangsverhalten der Mikrowellen-Antennenanordnung. Bei der koplanaren Anordnung der Hochfrequenz-Leiterstrukturen, von denen eine beispielsweise eine Massefläche enthält oder bildet, lassen sich geringe Abstände zwischen den Leiterstrukturen analysieren, so dass der Blindwiderstand gering ist.

Die Bauelemente der Schaltung, beispielsweise Busankopplungsbausteine, Frequenzweichen, Widerstände und dergleichen, sind zweckmäßigerweise an den Antennenkörper angelötet und/oder gebondet. Auch Teile der Hochfrequenz-Leiterstrukturen können mit gebondeten Leitungen miteinander verbunden sein.

Die erste und/oder zweite Polfläche sind zweckmäßigerweise unmittelbar zum Abstrahlen und/oder Empfang der Mikrowellen vorgesehen. Ein zusätzlicher Abstrahlkörper oder Empfangskörper ist nicht erforderlich, so dass optimale Sende- und Empfangseigenschaften erzielt werden. Beispielsweise ist die erste Polfläche an einer Innenfläche eines Innenraums des Antennenkörpers und/oder einer Stirnseite des Antennenkörpers angeordnet oder bildet diese jeweiligen Flächen zumindest teilweise. Die zweite Polfläche ist vorteilhaft an der Außenfläche oder einer Zwischenfläche in Umfangsrichtung des Antennenkörpers angeordnet oder bildet diese jeweilige Fläche. Der Innenraum kann hohl oder mit einem dielektrischen oder elektrisch leitfähigem Material ausgefüllt sein.

Die erste Polfläche ist zweckmäßigerweise zumindest teilweise an einer zur Sende- und/oder Empfangsrichtung der Mikrowellen-Antennenanordnung hin orientierten Stirnseite des Antennenkörpers angeordnet und die zweite Polfläche an einem Umfang des Antennenkörpers, beispielsweise dem Außenumfang oder einer Zwischenlage im Umfangsrichtung.

Zwischen der ersten und der zweiten Polfläche sind vorteilhafterweise zumindest abschnittsweise konstante, insbesondere radial konstante Abstände vorhanden. Die beiden Polflächen sind vorteilhafterweise zumindest abschnittsweise zueinander konzentrisch, insbesondere in einem Übergangsbereich zu der Leitungsstruktur.

Im Rahmen der Erfindung ist es auch möglich, dass eine oder mehrere Polflächen durch einen Abstrahlkörper gebildet werden, der durch den Antennenkörper gehalten wird. Der Abstrahlkörper ist beispielsweise in den Antennenkörper eingeklebt, eingerastet, eingeschweißt, eingegossen oder eingespritzt. Der Abstrahlkörper besteht beispielsweise aus Metall. Der Abstrahlkörper hat die gleiche elektrische Polarität wie eine der Polflächen der Koppelsonde und ist z.B. unmittelbar mit dieser elektrisch verbunden. Besonders bevorzugt ist es, den Abstrahlkörper zu vergießen oder zu umspritzen, so dass bereits durch die Spritzform bzw. Gussform die Wandungsdicke des Antennenkörpers definiert ist. Durch eine nachgeschaltete spanabhebendende Bearbeitung, z.B. Drehen und/oder Fräsen, kann die Wandungsdicke genauer eingestellt werden. Wenn der Antennenkörper mit dem von ihm gehaltenen Abstrahlkörper ausgehärtet ist, gegebenenfalls nachbearbeitet ist, wird er außenseitig mit einem elektrisch leitenden Material beschichtet, das dann die mit dem Abstrahlkörper zusammenwirkende Polfläche der Koppelsonde bildet.

Der Abstrahlkörper kann auch dadurch hergestellt werden, dass ein elektrisch leitfähiges Material, beispielsweise ein elektrisch leitfähiger Kunststoff, in eine Kavität des Antennenkörpers eingegossen oder eingespritzt wird.

Der Abstrahlkörper besteht zweckmäßigerweise im wesentlichen aus Metall. Möglich ist aber auch, dass der Abstrahlkörper ein dielektrischer Körper ist, der mit einer elektrischen leitfähigen Beschichtung zur Bildung einer oder mehrerer Polflächen der Mikrowellen-Antennenanordnung versehen ist. Der Abstrahlkörper sitzt zweckmäßigerweise fest in dem Antennenkörper, so dass die Abstände zwischen den Polflächen des Abstrahlkörpers und denen des Antennenkörpers konstant bleiben.

Der Antennenkörper wird zweckmäßigerweise als Ganzes, d.h. mit bereits vormontiertem Abstrahlkörper, in die Leitungsstruktur eingesetzt. Bei der Leitungsstruktur handelt es sich beispielsweise um ein Gehäuse, in dem das Messobjekt angeordnet ist, z.B. das Gehäuse eines pneumatischen Arbeitszylinders. Das Gehäuse bzw. die Leiterstruktur sind elektrisch leitfähig. An das Gehäuse ist eine durch die Beschichtung gebildete Polfläche des elektrischen Antennenkörpers elektrisch angeschlossen, beispielsweise durch Einlöten oder Anlöten, Schweißen, Verbinden mit einem elektrisch leitfähigen Klebematerial oder dergleichen.

Der Antennenkörper weist zweckmäßigerweise eine Befestigungseinrichtung zur Befestigung an der Leitungsstruktur bzw. dem Gehäuse auf, beispielsweise Schraubmittel, formschlüssig an die Leitungsstruktur anlegbare Fläche, Rastmittel, Klebeflächen oder dergleichen. Prinzipiell denkbar ist aber auch ein Anspritzen oder Ankleben des Antennenkörpers an die Leitungsstruktur.

Die erste und zweite Polfläche haben vorteilhaft im wesentlichen konstante Abstände, beispielsweise abschnittsweise etwa konstante radialen Abstände. Die beiden Polflächen sind elektrisch voneinander isoliert. Vorteilhafterweise sind die erste und die zweite Polfläche zueinander konzentrisch. Der Antennenkörper bildet vorteilhaft einen Koaxial-Dipol.

Der Antennenkörper ist zweckmäßigerweise zumindest teilweise rotationssymmetrisch, z.B. ein Zylinder oder ein Konus. Er kann auch im wesentlichen ein Zylinder, insbesondere ein Stufenzylinder, sein, der konische Abschnitte enthalten kann. Auch eine plattenartige Gestalt, insbesondere im Bereich der Schaltung, oder beliebige Kombinationen aus zylindrischen, plattenartigen und/oder konischen Bereichen sind, wie später bei den Ausführungsbeispielen noch ausgeführt wird, ohne weiteres möglich.

Der Antennenkörper kann auch einen rohrartigen, zweckmäßigerweise innen und außen elektrisch leitfähigen, z.B. beschichteten, Abschnitt enthalten, der einen Koaxialleiter bildet.

Der Koaxialleiter verbindet beispielsweise eine Abstrahlseite und/oder Empfangsseite der Mikrowellen-Antennenanordnung zur Leitungsstruktur hin mit einer Trägerstruktur für die elektrische Schaltung. Die Trägerstruktur ist beispielsweise plattenartig und an einer Stirnseite des Koaxialleiter-Abschnitts angeordnet. Es ist aber auch möglich, die elektrische Schaltung, insbesondere den Hochfrequenzteil dieser Schaltung, zumindest teilweise an der Außenseite des Koaxialleiter-Abschnitts anzuordnen. Der Koaxialleiter-Abschnitt kann auch mehrlagig ausgestaltet sein, so dass Bauelemente und Leitungsstrukturen der Schaltung getrennt durch Isolationsschichten übereinander angeordnet sind.

Es ist möglich, die erste und/oder die zweite Polfläche zur Umgebung hin zumindest teilweise mit einer elektrischen Isolationsschicht zu versehen, beispielsweise innenseitig. Außenseitig ist es besonders bevorzugt, dass die dort befindliche Polfläche, insbesondere die zweite Polfläche, so in elektrischem Kontakt mit der Leitungsstruktur steht, in der das zu messende Messobjekt befindet, dass die Mikrowellen-Antennenanordnung Mikrowellen in die Leitungsstruktur einkoppeln und/oder aus der Leitungsstruktur empfangen kann.

Nachfolgend werden Ausführungsbeispiele der Erfindung anhand der Zeichnung erläutert. Es zeigen:
- Figur 1: eine schematische Querschnittsansicht einer Aktorvorrichtung, die mit einer erfindungsgemäßen Positionsmessvorrichtung ausgestattet ist, etwa entsprechend einer Linie A-A eines Deckels der Aktorvorrichtung in Figur 2,
- Figur 2: eine perspektivische Explosionsdarstellung eines Deckelbereichs der Aktorvorrichtung gemäß Figur 1 mit einer Schutzabdeckungseinrichtung, einem Abstrahlkörper und einem Antennenkörper zum Halten des Abstrahlkörpers,
- Figur 3: eine schematisch modifizierte perspektivische Ansicht des Antennenkörpers gemäß Figur 1, der Leiterstrukturen in einer Mikrostrip-Anordnung aufweist,
- Figur 4: eine schematische Querschnittsansicht etwa entsprechend Figur 1 einer zweiten Aktorvorrichtung mit einem weiteren Ausführungsbeispiel einer Mikrowellen-Antennenanordnung gemäß der Erfindung,
- Figur 5: eine schematisch modifizierte perspektivische Ansicht des Antennenkörpers gemäß Figur 4, der koplanare Leiterstrukturen hat,
- Figur 6: eine Draufsicht auf die Leiterstrukturen des Antennenkörpers gemäß Figur 5,
- Figur 7: eine schematische perspektivische Ansicht eines Antennenkörpers mit einem Koaxialleiter-Abschnitt und einer stirnseitig daran angeordneten zylindrischen Trägerstruktur für eine HF-Schaltung,
- Figur 8: eine schematische perspektivische Ansicht eines Antennenkörpers mit einem Koaxialleiter-Abschnitt, der einen mehrlagigen Aufbau als Basis für eine HF-Schaltung aufweist,
- Figur 9: eine Querschnittsansicht eines Koaxialleiterabschnitts Teils des Antennenkörpers aus Figur 8 gemäß einer Linie B-B in Figur 8,
- Figur 10: eine Querschnittsansicht eines pneumatischen Wartungsgeräts, bei dem eine erfindungsgemäße Positionsmessvorrichtung oder Abstandsmessvorrichtung eine Füllhöhe einer Flüssigkeit oder eines Pulvers misst, und
- Figur 11: eine Explosions-Detailansicht einer Mikrowellen-Antennenanordnung der Positionsmessvorrichtung nach Figur 10.

Ein pneumatischer Arbeitszylinder 10 bildet eine Aktorvorrichtung 11, insbesondere eine fluidtechnische Aktorvorrichtung. In einem Gehäuse 12 ist ein Kolben 13, der ein Aktorglied 14 bildet, linear hin und her beweglich gelagert. Über Fluid- bzw. Druckluftanschlüsse 15, 16 kann Druckluft 17 in eine Kammer 18, die einen Bewegungsraum 19 für das Aktorglied 14 bildet, einströmen und ausströmen, um den Kolben 13 anzutreiben.

Ein Mittelteil 20 des Gehäuses 12 mit einer Umfangswandung 25, z.B. aus Metall, ist rohrartig ausgestaltet und hat einen Innenquerschnitt, der mit einer Außenkontur des Aktorglieds 14 korreliert und beispielsweise im wesentlichen kreisrund ist. Ein Lager-Deckel 23 und ein Abschluss-Deckel 24, insbesondere aus Metall, an Enden des Gehäuses 12 verschließen die Kammer 18 druckdicht, z.B. mit Dichtungen, O-Ringen oder dergleichen zwischen den Deckeln 23, 24 und dem Mittelteil 20. Die Deckel 23, 24 sind z.B. mit Bolzen an das Mittelteil 20 angeschraubt, die durch Bohrungen 21 an Verstärkungs- und Haltestegen 29 durchgesteckt sind.

Um den Kolben 13 herum verläuft ringförmig eine Dichtung 33, so dass der Kolben 13 die Kammer 18 in zwei druckdicht voneinander getrennte Teilräume unterteilt. Die Kolbenstange 32 bildet ein Kraftabgriffsglied, das den Lager-Deckel 23 durchdringt und dort an einem Lager 34 gelagert ist.

Der Kolben 13 ist in Längserstreckungsrichtung 30 zwischen dem Lager-Deckel 23 und dem Abschluss-Deckel 24 längsbeweglich (Pfeil 30'). Eine Positionsmessvorrichtung 40 misst den Abstand 41 des Aktorglieds 14 relativ zu einer Endlage 42 im Bereich des Abschluss-Deckels 24. Die Positionsmessvorrichtung 40 arbeitet mit Hilfe von Mikrowellen, beispielsweise im Bereich von 1 MHz bis ca. 25 GHz, zweckmäßigerweise etwa 3 bis 10 GHz, die eine Mikrowellen-Antennenanordnung 43 mit einer Koppelsonde 44 in den Bewegungsraum 19 aussendet, der zumindest an seiner Innenseite im wesentlichen elektrisch leitfähig ist und somit eine Leitungsstruktur 45 für die Mikrowellen bildet.

Das Aktorglied 14 bildet ein Messobjekt 46, das die Mikrowellen reflektiert. In Abhängigkeit von der jeweiligen Position des Messobjekts 46 in dem Bewegungsraum 19 - eine von der Endlage 42 entfernte Stellung des Aktorglieds 14 ist in gestrichelten Linien dargestellt - ändert sich die Phase der von der Mikrowellen-Antennenanordnung 43 ausgesendeten und empfangenen Mikrowellen. Anhand der Phasenlage und/oder der Laufzeit der Mikrowellen kann eine Schaltung 47 der Positionsmessvorrichtung 40 die Position des Aktorglieds 14 im Bewegungsraum 19 ermitteln und beispielsweise an eine nicht dargestellte Steuerungsvorrichtung zur Steuerung der Aktorvorrichtung 11 melden, z.B. eine speicherprogrammierbare Steuerungsvorrichtung.

Die Mikrowellen-Antennenanordnung 43 enthält einen Antennenkörper 52, der beispielsweise zum Mess- oder Bewegungsraum 19 hin eine gestufte, zylindrische Gestalt und an seiner entgegengesetzten Seite eine z.B. plattenartige Trägerstruktur 50 für die Schaltung 47 aufweist. Der Antennenkörper 52 ist aus elektrisch isolierendem bzw. dielektrischem Material, und z.B. ein Kunststoff-Spritzgussteil.

Der Antennenkörper 52 hält zentral, insbesondere koaxial, einen zumindest außenseitig elektrisch leitfähigen Abstrahlkörper 54 der Mikrowellen-Antennenanordnung 43.

Der Antennenkörper 52 und somit die Mikrowellen-Antennenanordnung 43 sind zentral, insbesondere koaxial, mit dem Mess- bzw. Bewegungsraum 19 an einer hinteren Stirnwandung 53 des Abschluss-Deckels 24 angeordnet, beispielsweise in eine entsprechende Ausnehmung oder Aufnahme 35 an der Stirnwandung 53 eingesteckt, eingeklebt, eingeschraubt oder in sonstiger Weise fest verbunden. Die Aufnahme 35 hat eine Innenkontur, die mit einer Außenkontur des Antennenkörpers 52 korreliert, so dass dieser z.B. im wesentlichen flächig an Innenflächen der Aufnahme 35 und elektrisch leitend anliegt.

Eine Wandung 90 des Antennenkörpers 52 begrenzt eine Aufnahme bzw. einen Aufnahmeraum 83, der an seiner dem Mess- bzw. Bewegungsraum 19 zugewandten Vorderseite durch eine Stirnwand 26 des beispielsweise pilzartigen Abstrahlkörpers 54 verschlossen ist. Die Stirnwand 26 ist an einem zylindrischen Antennenabschnitt 27 des Abstrahlkörpers 54 angeordnet und steht zum Mess- bzw. Bewegungsraum 19 hin vor. In dem Aufnahmeraum 83 ist ein Hohlraum gebildet, der radial außen durch die Wandung 90 und stirnseitig durch die Stirnwand 26 begrenzt wird. Der Abstrahlkörper 54 ist mittels eines elektrischen Leiterabschnitts 28 mit der Schaltung 47 verbunden.

Von der Aufnahme 83 nach hinten weg erstreckt sich ein rohrartiger Kanalabschnitt, im folgenden als Rohrabschnitt 91 bezeichnet, nach hinten, der in den Kanal 37 des Abschluss-Deckels 24 eingesteckt ist. Der Leiterabschnitt 28 des Abstrahlkörpers 54 erstreckt sich durch den Rohrabschnitt 91 nach hinten mit oder ohne (nicht dargestellt) Isolationsabstand zu dem Rohrabschnitt 91 zu der Trägerstruktur 50 mit der Schaltung 47. Am hinteren Ende hat der Leiterabschnitt 28 beispielsweise einen Schraubabschnitt oder Steckabschnitt 59, der in eine Steckaufnahme 31 eingeschraubt bzw. eingesteckt und mit der Schaltung 47 elektrisch verbunden ist. Der Steckabschnitt 59 kann auch ein Lötabschnitt sein, der an die Schaltung 47 angelötet ist.

Die Stirnwand 26 liegt auf einer Stirnseite 84 eines Vorderteils 81 des Antennenkörpers 52 auf, zweckmäßigerweise flächig oder vorteilhaft auf kreissegmentartigen Vorsprüngen 79. Das Vorderteil 81 weist einen größeren Umfang als ein hinterer Abschnitt 82 des Antennenkörpers 52 auf, der in der Aufnahme 35 aufgenommen ist. Das Vorderteil 81 liegt auf der Stirnwand 53 vorn auf bzw. steht vor die Stirnwand 53 vor.

Der Antennenkörper 52 ist aus einem dielektrischen Material, insbesondere aus einem Kunststoff mit geringer thermischer Volumenänderung hergestellt, z.B. Lexan, Vectra oder dergleichen. Beispielsweise im Rahmen eines Spritzgussverfahrens kann die Stärke der Wandung 90 optimal eingestellt werden. Es ist auch denkbar, den Antennenkörper 52 als ein Drehteil herzustellen, um die Fertigungsqualität bzw. die Stärke der Wandung 90 zu optimieren.

Der Antennenkörper 52 ist mit einer elektrisch leitfähigen Beschichtung 85 versehen, die beispielsweise Kupfer und/oder Nickel und/oder Aluminium und/oder Gold enthält. Die Beschichtung 85 ist durch Galvanisieren, chemisches und/oder physikalisches Bedampfen, Sputtern oder dergleichen auf den Antennenkörper 52 aufgebracht. Die Beschichtung 85 bildet eine erste und zweite Polfläche 86, 87.

Die erste Polfläche 86 ist mit einem kreisförmigen stirnseitigen Abschnitt 93 an der Stirnseite 84 sowie einer Innenfläche 88 des Aufnahmeraums 83 ausgebildet. Der Abstrahlkörper 54 bildet eine erste Polfläche 55, die mit der ersten Polfläche 86 des Antennenkörpers 52 elektrisch verbunden ist, beispielsweise durch elektrisch leitfähigen Klebstoff oder eine Lötverbindung. Der Abstrahlkörper 54 könnte auch in den Aufnahmeraum 83 eingepresst sein.

Die zweite Polfläche 87 ist am Außenumfang 89 des Antennenkörpers 52 ausgebildet und mit der Leitungsstruktur 45 elektrisch verbunden, beispielsweise in die Aufnahme 35 eingepresst und/oder elektrisch leitfähig eingeklebt und/oder eingelötet oder dergleichen.

Die Polflächen 86, 87 erstrecken sich auch über den Rohrabschnitt 91, so dass die Innenfläche und der Außenumfang des Rohrabschnitts 91 metallisch leitfähig beschichtet sind. Daher bildet der Rohrabschnitt 91 einen Koaxialleiter-Abschnitt 94. Von der Stirnwand 26 in Richtung des Bewegungsraums 19 weg gehen die Mikrowellen von einem Koaxial-Mode in einen Hohlleitermode über.

Eine Variante der Erfindung kann vorsehen, dass der Abstrahlkörper 54 in einem Gussverfahren, insbesondere einem Spritzgussverfahren mit dem Antennenkörper 52 umspritzt wird.

Die Position der Mikrowellen-Antennenanordnung 43 relativ zu dem Gehäuse 12 bzw. der Leitungsstruktur 45, mit der die Mikrowellen-Antennenanordnung 43 zusammenwirkt, insbesondere aber die Position der Polflächen der Mikrowellen-Antennenanordnung 43 relativ zueinander sind zur exakten Positionsbestimmung des Abstandes 41 wesentlich. Damit diese Positionierung der Mikrowellen-Antennenanordnung 43 eingehalten werden und somit eine hohe Messgenauigkeit erzielt wird, sind bei der Aktorvorrichtung 11 mehrere Maßnahmen getroffen, die an sich jeweils eine eigenständige Erfindungen bilden:

Eine Schutzabdeckungseinrichtung 60 dichtet die Mikrowellen-Antennenanordnung 43 gegenüber dem Druckraum bzw. Bewegungsraum 19 druckdicht ab. Vor der Mikrowellen-Antennenanordnung 43 ist ein Abdeckabschnitt 62 angeordnet, der von einem Anschlagabschnitt 61, insbesondere einem Anschlagring 64, gehalten wird. Beide Teile 62, 64 sind druckdicht verbunden, z.B. mittels nicht dargestellter Dichtungen, oder sie sind einstückig. Der Anschlagring 64 bildet vorn einen Anschlag 63 für den Kolben 13. Die Schutzabdeckungseinrichtung 60 ist druckdicht in das Gehäuse 12 eingesetzt, z.B. an den Deckel 24 angespritzt und/oder mit nicht dargestellten Dichtungen, z.B. zwischen einem Außenumfang der Schutzabdeckungseinrichtung 60 und der Seiten- oder Umfangswandung 25 und/oder einer Seiten- oder Umfangswandung des Deckels 24. Im hinteren Abschnitt der Schutzabdeckungseinrichtung 60 ist eine Kammer 65 durch den bodenartigen Abdeckabschnitt 62 sowie eine hintere Seitenwandung 66 gebildet. Ein vor die Stirnwand 53 vorstehendes Vorderteil der Mikrowellen-Antennenanordnung 43 ist in der Kammer 65 vor Umwelteinflüssen geschützt untergebracht und hat zu der Schutzabdeckungseinrichtung 60 einen vorderen und zweckmäßigerweise seitlichen Abstand 69, in den hinein sich der Abdeckabschnitt 62 verformen kann, beispielsweise in Folge einer Druckwelle, die das Aktorglied 14 verursacht.

Der Anschlagring 64 steht vor den Abschluss-Deckel 24 vor und erstreckt sich in das Mittelteil 20 hinein. An seinem vorderen Abschnitt, zwischen dem Anschlag 63 und der Zwischendecke, die den Abdeckabschnitt 62 bildet, begrenzt der Anschlagring 64 einen Aufnahmeraum 68, z.B. für eine nicht dargestellte Endlagendämpfung vorn am Kolben 13.

Die Schutzabdeckungseinrichtung 60 enthält einen Fluidkanal 70 zur Verbindung der Kammer 18 mit dem Druckluftanschluss 16, der beispielsweise durch den Anschlagring 64 hindurch verläuft.

Damit sich die Mikrowellen in dem Bewegungsraum 19 im wesentlichen symmetrisch ausbreiten können, ist dem Fluidkanal 70 als Kompensationsmittel 71 ein Blindkanal 72 zugeordnet, der an der dem Fluidkanal 70 entgegengesetzten Seite des Anschlagrings 64 verläuft. Der Blindkanal 72 endet an der Umfangswandung 67, d.h. die Umfangswandung 67 verschließt den Blindkanal 72 radial außen.

Die Schutzabdeckungseinrichtung 60 besteht aus einem dielektrischen Material, insbesondere aus einem Kunststoff mit geringer Volumenänderung in Abhängigkeit von thermischen Änderungen, z.B. aus Lexan, Vectra oder dergleichen. Die Schutzabdeckungseinrichtung 60 ist auf das Abstrahlverhalten der Mikrowellen-Antennenanordnung 43 abgestimmt, so dass sich die Mikrowellen, die von der Mikrowellen-Antennenanordnung 43 ausgesendet werden, in einem vorbestimmten Mode in der Leitungsstruktur 45 bzw. dem Bewegungsraum 19 ausbreiten.

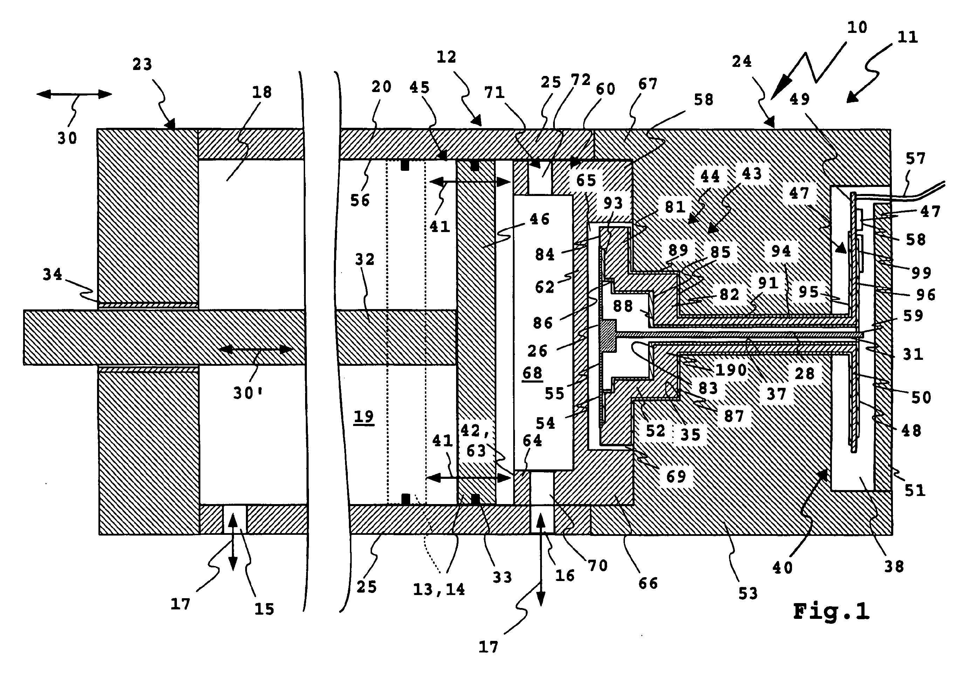

Ein vorderer Teil 73 der Schutzabdeckungseinrichtung 60 weist einen größeren Durchmesser auf als ein hinterer Teil 74, so dass zwischen dem vorderen und dem hinteren Teil 73, 74 ein Anschlag 75 gebildet ist. Dies ist in der schematischen Darstellung von Figur 1 nicht dargestellt. Der Anschlag 75 liegt an einer Stirnfläche 77 der Umfangswandung 67 des Abschluss-Deckels 24 an. Somit stützt sich die Schutzabdeckungseinrichtung 60 an der hinteren Stirnwandung 53 des Abschluss-Deckels 24 und an der Stirnfläche 77 ab.

Die Stärke einer Wandung 90 des Antennenkörpers 52, an deren Innenfläche 88 und Außenumfang 89 die Metallisierung oder Beschichtung 85 angeordnet ist, ist abschnittsweise konstant. Dadurch sind auch die jeweiligen Abstände in diesen Abschnitten zwischen den ersten und zweiten Polflächen 86 und 87 zumindest im wesentlichen konstant, so dass mit der Mikrowellen-Antennenanordnung 43 gesendete Mikrowellen ein optimales Frequenzverhalten aufweisen.

Die Schaltung 47 enthält beispielsweise einen Hochfrequenz-Teil 48 zum Erzeugen bzw. Senden und Empfangen von Mikrowellen mittels der Koppelsonde 44 sowie einen Auswerte-Teil 49 zum Ermitteln einer Position des Messobjekts 46 anhand der Mikrowellen. Der Hochfrequenz-Teil 48 enthält oder bildet eine Mikrowellensendeeinrichtung und eine Mikrowellenempfangseinrichtung.

Der Auswerte-Teil 49 enthält auf die Trägerstruktur gelötete oder in sonstiger Weise elektrisch verbundene Bauteile 58, z.B. einen digitalen Signalprozessor, Widerstände, eine Busankopplung, eine Sende- und/oder Empfangseinrichtung zum drahtgebundenen und/oder drahtlosen Senden von Positionssignalen mittels einer Leitung 57 und/oder einer nicht dargestellten Antenne an eine übergeordnete Steuerung und dergleichen.

Die Teile 48, 49 sind elektrisch miteinander verbunden, beispielsweise mit elektrischen Leiterbahnen. Ein Deckel 51 schützt die Schaltung 47, die z.B. in einer Kammer 38 des Gehäuses 12 bzw. des Abschluss-Deckels 24 angeordnet ist, vor Umwelteinflüssen.

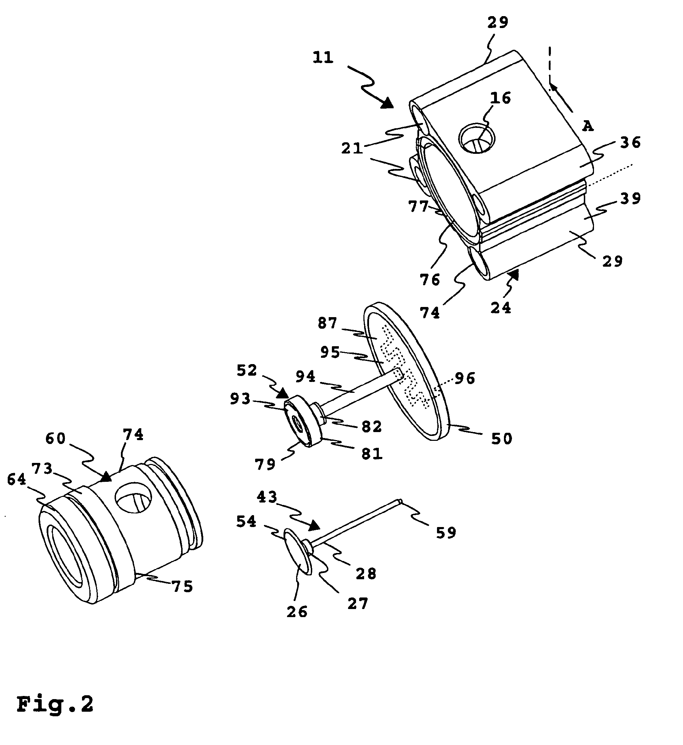

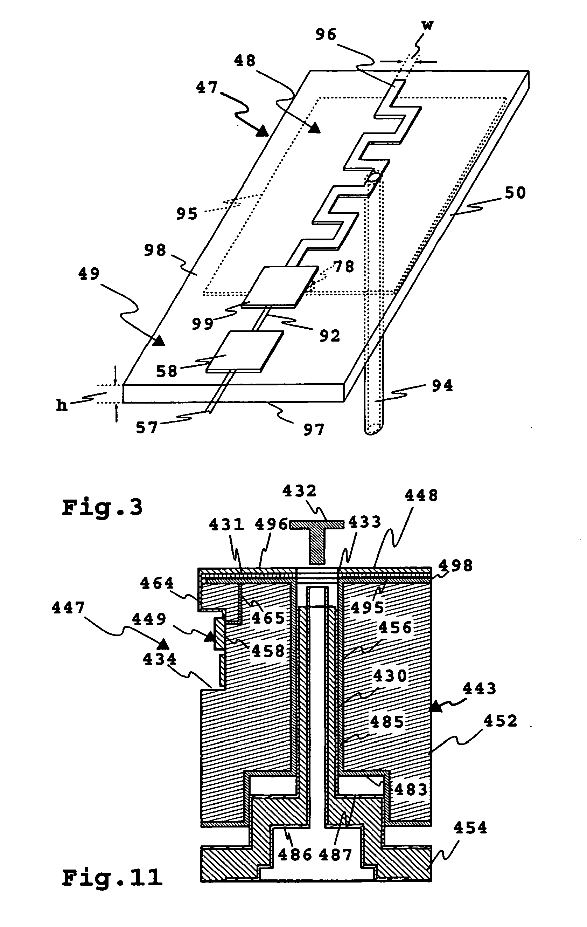

Die außerseitige Beschichtung bzw. zweite Polfläche 87 erstreckt sich vom Koaxialleiter 94 weg auch zur Unterseite 97 der Platte bzw. Trägerstruktur 50 und bildet dort eine Massefläche 95. Die innere, erste Polfläche 86 ist aus dem Koaxialleiter 94 heraus ebenfalls zur Trägerstruktur 50 geführt und zwar zu deren Oberseite 98, wo sie einen Antennenleiter 96 bildet oder mit diesem elektrisch verbunden ist. Die Massefläche 95 und/oder der Antennenleiter 96, die Hochfrequenz-Leiterstrukturen bilden, können beliebige geometrische Formen haben, je nach gewünschter Eigenschaft der zu erzeugenden und/oder zu empfangenden Mikrowellen. Beispielsweise ist der Antennenleiter 96 mäanderförmig. Der Antennenleiter 96 und die Massefläche 95 sind durch die elektrisch isolierende Trägerstruktur 50, die z.B. als runde (Figur 1 und 2) oder polygone (schematisch in Figur 3) Platte ausgestaltet ist, voneinander getrennt, so dass eine Mikrostrip-Anordnung gebildet ist. Eine Breite w des Antennenleiters 96 sowie eine Stärke bzw. Höhe h der Trägerstruktur 50 definieren den elektrischen Blindwiderstand am Eingang der Mikrostrip-Schaltung.

Der Hochfrequenz-Teil 48 kann auch weitere schematisch dargestellte Bauteile 99 enthalten, beispielsweise Ein- und Auskopplungselemente für zu sendende bzw. zu empfangende Mikrowellen, Kondensatoren, Millimeterwellen-Integrated Circuits (ICs), Richtkoppler und dergleichen, die auf die Trägerstruktur 50 aufgelötet, aufgebondet oder in sonstiger Weise elektrisch mit dieser verbunden sind oder zumindest teilweise durch Leiterstrukturen gebildet sind. Durchkontaktierungen 78 verbinden die HF-Bauteile 99 mit der an der Unterseite angeordneten zweiten Polfläche 87 bzw. Massefläche 95.

Die Bauteile 58,99 sowie die sonstigen Schaltungsbestandteile der Schaltung 47 sind durch schematisch eingezeichnete Leiterbahnen 92 miteinander verbunden. Die Leiterbahnen 92 sind zweckmäßigerweise durch Beschichtung, thermisches Aufbonden, Aufkleben, Laserbeschichten, Galvanisieren oder dergleichen gebildet.

Die Trägerstruktur 50 kann, insbesondere im Bereich des Auswerte-Teils 49, auch einen mehrlagigen Aufbau haben, wobei Schichten mit Leiterbahnen durch Isolationsschichten voneinander getrennt sind.

Es versteht sich, dass der Auswerte-Teil 49 auch durch eine separate (nicht dargestellt) Platine gebildet sein kann.

Der Antennenkörper 52 wird zweckmäßigerweise als Ganzes, mit bereits vormontiertem Abstrahlkörper 54 sowie vollständig bestückter Schaltung 47 in den Abschluss-Deckel 24 eingesetzt. Der Abschluss-Deckel 24 ist vorliegend zweiteilig ausgeführt, das heißt er hat ein Oberteil 36 und ein Unterteil 39, so dass beispielsweise der Antennenkörper 52 zunächst in das Unterteil 39 eingesetzt wird und sodann das Oberteil 36 auf das Unterteil 39 geklebt, geschraubt oder in sonstiger Weise mit diesem verbunden wird.

Es wäre bei einer Abwandlung der Ausführungsform gemäß Figur 1 auch denkbar, die Beschichtung 85 im wesentlichen nur außenseitig zur Bildung der zweiten Polfläche 87 anzubringen, während ein kleinerer innenseitiger Teil der Beschichtung als die erste Polfläche 86 im wesentlichen als Kontaktfläche für den Antennenkörper 52 dient. Der Antennenkörper 52 und die zweiten Polfläche 87 dienen dann als Koppelsonde.

Es ist auch möglich, den Antennenkörper 52 mit dem Material des Abstrahlkörpers 54 zu umspritzen und anschließend die Außenseite des Antennenkörpers 52 mit der zweiten Polfläche 87 elektrisch leitfähig zu beschichten.

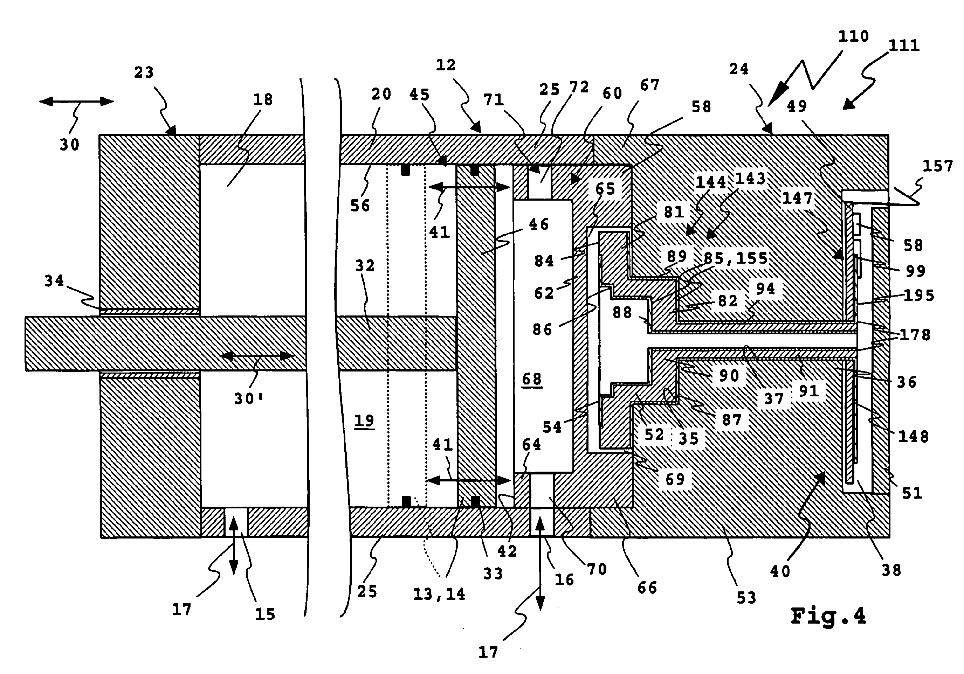

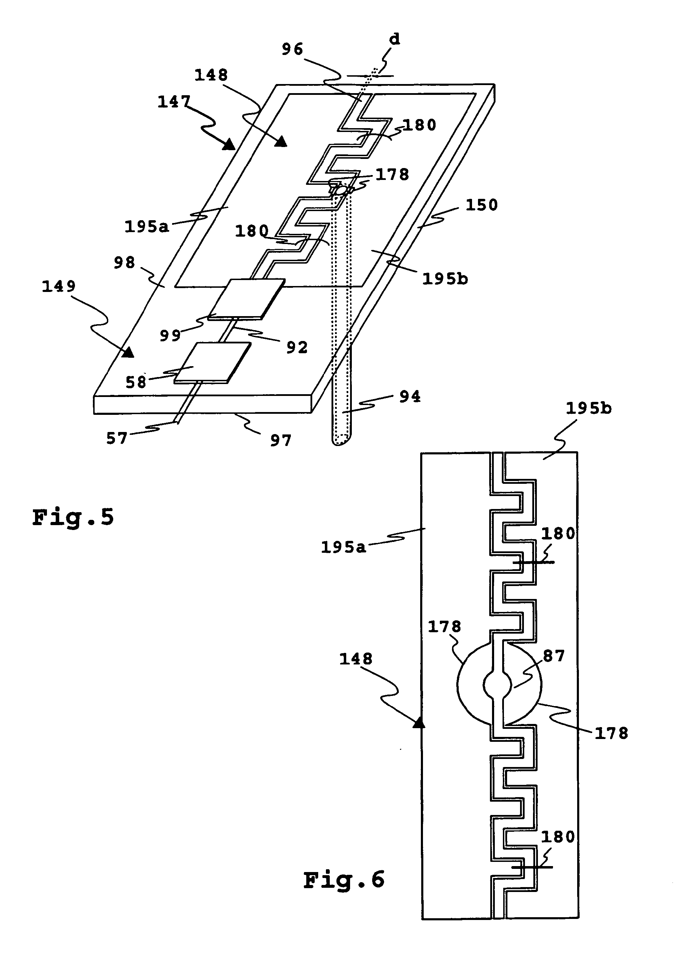

In den Figuren 4, 5 und 6 ist eine Positionsmessvorrichtung 140 mit einer Mikrowellen-Antennenanordnung 143 gezeigt, die eine im Gegensatz zur Schaltung 47 koplanar aufgebaute Schaltung 147 mit einem koplanaren Hochfrequenz-Teil 148 aufweist. Die Positionsmessvorrichtung bildet einen Bestandteil eines pneumatischen Arbeitszylinders 110 bzw. einer Aktorvorrichtung 111, die ähnlich aufgebaut ist wie die Aktorvorrichtung 11, so dass im wesentlichen gleiche und teilweise zur Verdeutlichung von Abweichungen um 100 erhöhte Bezugszeichen verwendet sind.

Ein Antennenkörper 152 dient unmittelbar als Sende- und Empfangsdipol bzw. Koppelsonde 144, das heißt die innere, erste Polfläche 86 und die äußere Polfläche 87 dienen unmittelbar als Abstrahlflächen und Empfangsflächen 155 für Mikrowellen.

Die innere Polfläche 86 ist aus dem Innenraum des Koaxialleiters 94 heraus zur Oberseite einer Platte bzw. Trägerstruktur 150 für die Schaltung 147 geführt und geht dort in einen mäanderförmigen oder nicht gezeigten geradlinigen Antennenleiter 196 über. In einem vorteilhafterweise engen Abstand d zu dem Antennenleiter 196 sind elektrisch leitfähige Flächen 195a, 195b, z.B. Masseflächen, angeordnet. Die Flächen 195a, 195b haben vorteilhafterweise an ihrer dem Antennenleiter 196 zugewandten Seite eine mit dem Verlauf des Antennenleiters 196 korrelierende, z.B. gezackte Struktur, um nahe bei dem Antennenleiter 196 zu sein. Dadurch hat der Hochfrequenz-Teil 148 einen geringen elektrischen Blindwiderstand.

Die Masseflächen 195a, 195b sind zudem durch Leiterverbindungen 180 miteinander verbunden, die den Antennenleiter 196 überbrücken. Dies hat den Vorteil, dass beispielsweise Mikrowellen mit unerwünschter Frequenz und/oder Amplitude unterdrückt werden. Die Leiterverbindungen 180 sind beispielsweise sogenannte Bondingverbindungen bzw. Drahtverbindungen. Von der am Koaxialleiter 94 äußeren zweiten Polfläche 87 führen Durchkontaktierungen 178 zur Oberseite 98 der Trägerstruktur 150. Die Schaltung 147 kommuniziert drahtlos, beispielsweise mit einer Antenne 157, mit einer nicht dargestellten übergeordneten Steuerungs- und/oder Überwachungseinrichtung.

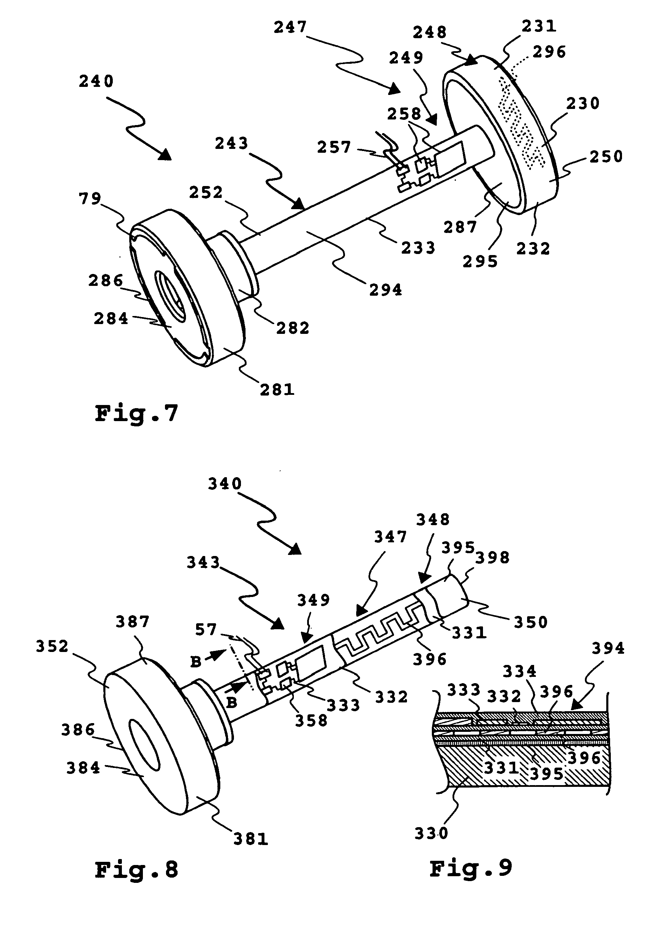

In Figur 7 ist eine Abwandlung der Mikrowellen-Antennenanordnung 43 in Gestalt einer Mikrowellen-Antennenanordnung 243 einer Positionsmessvorrichtung 240 gezeigt. Der vordere Teil der Mikrowellen-Antennenanordnung 43 entspricht weitgehend demjenigen der Mikrowellen-Antennenanordnung 43: beispielsweise könnte der Abstrahlkörper 54 vorn an einen Antennenkörper 252 ansetzbar bzw. einsetzbar sein (nicht dargestellt). Gleiche und gleichartige Komponenten der Mikrowellen-Antennenanordnung 243 sind mit gleichen Bezugszeichen wie bei der Mikrowellen-Antennenanordnung 43 oder mit um 200 vergrößerten Bezugszeichen versehen.

Eine erste Polfläche 286 erstreckt sich von einer Stirnseite 284 eines vorderen Teils 281 des Antennenkörpers 252 durch einen Koaxialleiter 294 hindurch und geht an einer Rückseite 298 des Antennenkörpers 252 in einen Antennenleiter 296 über bzw. ist mit dem Antennenleiter 296 elektrisch verbunden. Der Antennenleiter 296 befindet sich an der Innenseite 230 eines topfartigen Hohlzylinders 231, beispielsweise an dessen Bodenfläche und/oder Umfangswandung. Der Hohlzylinder 231 weist zweckmäßigerweise einen größeren Durchmesser auf als der Koaxialleiter 294.

Die außenseitige zweite Polfläche 287 erstreckt sich von dem Vorderteil 281 des Antennenkörpers 252 über den Koaxialleiter 294 hinweg bis zur Außenseite 232 des Hohlzylinders 231, wo sie Massefläche 295 bildet oder mit dieser elektrisch verbunden ist. Die Massefläche 295 und der Antennenleiter 296 bilden insgesamt einen Hochfrequenz-Teil 248 einer Schaltung 247. Im Bereich des Koaxialleiters 294 ist die zweite Polfläche 287 radial außen vollständig oder teilweise mit einer elektrischen Isolation 233 versehen. Dadurch ist es möglich auf dem Koaxialleiter 294 Leiterbahnen und Bauteile 258 eines Auswerteteils 249 anzuordnen. Der Auswerteteil 249 sendet über Leitungen 257 Positionssignale an eine nicht dargestellte übergeordnete Steuerung. Der Hohlzylinder 231 bildet eine Trägerstruktur 250 für den Hochfrequenz-Teil 248, der Koaxialleiter 294 eine Trägerstruktur für den Auswerte-Teil 249.

Die Positionsmessvorrichtung 340 gemäß Figur 8 weist eine Mikrowellen-Antennenanordnung 343 mit einem Antennenkörper 352 auf, der aus einem dielektrischen Material, beispielsweise Kunststoff gefertigt ist. Soweit die Positionsmessvorrichtung 340 gleiche oder ähnliche Komponenten aufweist wie die Positionsmessvorrichtungen 40, 140 und 240 der vorher beschriebenen Ausführungsbeispiele der Erfindung, sind gleiche Bezugszeichen, teilweise mit voran gestellter "3" verwendet.

Eine am Vorderteil 381 des Antennenkörpers 352 außenseitige zweite Polfläche 387 ist auf einer Wandung 330 des Koaxialleiters 394 nach hinten bis zu einer hinteren Stirnseite bzw. Rückseite 398 geführt und bildet im Bereich des Koaxialleiters 394 eine Massefläche 395. Auf der Massefläche 395 befindet sich eine Isolationsschicht 331, beispielsweise aus Kunststoff. Auf der Isolationsschicht 331 ist ein beispielsweise mäanderförmiger oder geradliniger Antennenleiter 396 aufgebracht, beispielsweise durch galvanisches Beschichten, Sputtern oder dergleichen, der mit einer ersten Polfläche 386 elektrisch verbunden ist, die sich von einer Stirnseite 384 des Antennenkörpers 352 innen durch den Koaxialleiter 394 hindurch bis zur hinteren Stirnseite 398 erstreckt und dort mit dem Antennenleiter 396 elektrisch verbunden ist. Die Massefläche 395 und der Antennenleiter 396 bilden einen Hochfrequenz-Teil 348 einer Schaltung 347.

Insgesamt bildet der Koaxialleiter 394 eine Trägerstruktur 350 für die Schaltung 347. Auf der Schicht mit dem Antennenleiter 396 befindet sich nämlich eine weitere Isolationsschicht 332, auf der eine Leiterstruktur 333 zur elektrischen Verbindung von Bauteilen 358, beispielsweise Signalprozessoren, Operationsverstärkern oder dergleichen, eines Auswerteteils 349 der Schaltung 347 angeordnet ist. Die Schaltung 347 ist durch eine außenseitige Isolationsschicht 334, beispielsweise einer Vergußmasse oder dergleichen, vor Umwelteinflüssen geschützt. Somit sind alle wesentlichen Bauteil der Positionsmessvorrichtung 440 an dem Antennenkörper 352 angeordnet, teilweise in einem mehrlagigen oder mehrschichtigen, zwiebelartigen Aufbau.

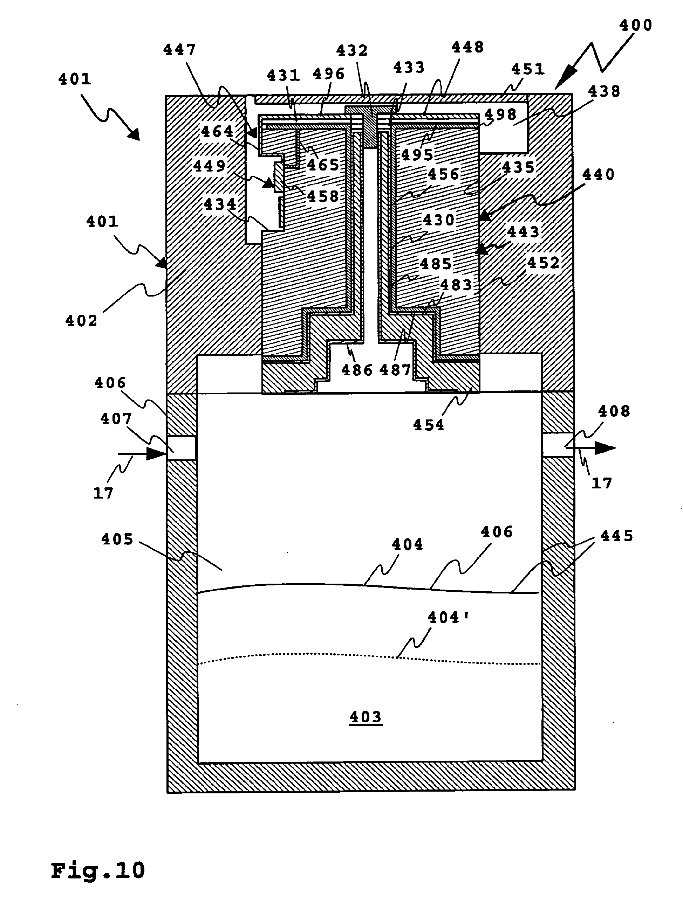

Ein weiteres Einsatzgebiet einer erfindungsgemäßen Positionsmessvorrichtung ist in Figur 10 dargestellt. Eine Positionsmessvorrichtung 440 ist in ein fluidtechnisches, insbesondere ein pneumatisches Wartungsgerät 400 eingebaut, beispielsweise einen Öler oder einen Trockner zur Aufbereitung von Druckluft 17. Die Positionsmessvorrichtung 440 ist an der Oberseite eines Gehäuses 401, in einem Deckel 402 eines Behälters 406 angeordnet und misst die Füllhöhe 404, 404' einer Flüssigkeit 403, beispielsweise eines Ausscheidungsproduktes aus der Druckluft 17 oder eines Additivs, das Druckluft 17 beigemengt wird. Die Flüssigkeit 403 ist in einem Aufnahmeraum 405 des Behälters 406 unterhalb der Positionsmessvorrichtung 440 enthalten. Die Druckluft 17 strömt durch einen Einlass 407 in den Aufnahmeraum 405 ein und durch einen Auslass 408 wieder aus.

Das Gehäuse 401 ist zumindest im Bereich des Aufnahmeraums 405 elektrisch leitfähig und enthält so eine elektrisch leitfähige Leitungsstruktur 445. Die Flüssigkeit 403 bildet ein Messobjekt 446. Die Positionsmessvorrichtung 440 misst einen Abstand 441 der Flüssigkeit 403 von dem Deckel 402. Die Positionsmessvorrichtung 440 meldet die Füllhöhe 404, 404' drahtgebunden über eine Leitung 457, insbesondere eine Busleitung, an eine nicht dargestellte Steuerung und/oder eine Anzeigeeinrichtung.

Die Positionsmessvorrichtung 440 enthält eine Mikrowellen-Antennenanordnung 443, die von einer Aufnahme 435 des Oberteils oder Deckels 402 aufgenommen ist und von dem Deckel 402 gehalten wird. Ein Antennenkörper 452 ist an seiner Innenseite sowie im Bereich einer vorderen, stufenzylindrischen Aufnahme 483 mit einer elektrisch leitfähigen Beschichtung 485 versehen. Die Beschichtung 485 ist beispielsweise auf einen dielektrischen, z.B. aus Kunststoff bestehenden Grundkörper des Antennenkörpers 452 aufgebracht, z.B. durch chemisches und/oder physikalisches Bedampfen. Von der Aufnahme 483 erstreckt sich ein rohrartiger Kanal 430 nach hinten, der ebenso wie eine Rückseite 498 des Antennenkörpers 452 mit der Beschichtung 485 versehen ist, die insgesamt eine zweite Polfläche 456 bildet.

Der Antennenkörper 452 hält einen Abstrahlkörper 454, der ebenfalls aus einem dielektrischen Material gefertigt ist, sowohl außen als auch innenseitig jedoch mit einer elektrisch leitfähigen Beschichtung versehen ist, die eine innere erste Polfläche 486 und eine äußere zweite Polflächen 487 bildet, die elektrisch voneinander isoliert sind. Der Abstrahlkörper 454 hat eine mit der Aufnahme 483 bzw. dem Kanal 430 korrelierende Gestalt, so dass die Polflächen 456 und 487 elektrisch leitfähig aufeinander flächig zu liegen kommen, und zweckmäßigerweise zusätzlich mit elektrisch leitfähigem Klebstoff, durch eine Lötverbindung oder dergleichen miteinander elektrisch verbunden sind. Der Abstrahlkörper 454 ist beispielsweise von vorn, in der Zeichnung von unten, in die Aufnahme 483 eingesteckt und/oder eingeschraubt (optional vorhandene Gewinde sind aus Gründen der Vereinfachung nicht dargestellt).

Auf dem an der Rückseite 498 befindlichen Teil der zweiten Polfläche 456 ist eine elektrische Isolationsschicht 431 angeordnet, auf der sich wiederum ein Antennenleiter 496 befindet. Von der Rückseite 398 her ist ein elektrisches Kontaktstück 432 durch eine Ausnehmung 433 hindurch, das heißt mit Abstand zu der hinteren zweiten Polfläche 456 bzw. Massefläche 495, durchgesteckt, um die erste Polfläche 486 mit dem Antennenleiter 496 elektrisch zu verbinden. Das Kontaktstück 432 ist beispielsweise ein Dorn mit einer Stirnplatte oder ein sonstiges metallisches Bauteil. Die Massefläche 495 und der Antennenleiter 496 bilden ein Hochfrequenz-Teil 448 einer Schaltung 447 der Positionsmessvorrichtung 440. Der Hochfrequenz-Teil 448 befindet sich im Bereich einer Kammer 438, die beispielsweise durch einen Deckel 451 verschlossen ist.

Seitlich am Antennenkörper 452 ist eine Ausnehmung 434 ausgebildet, mit der die Massefläche 495 bzw. der Antennenleiter 496 elektrisch verbunden sind, beispielsweise mit Leitungsverbindungen 464, 465, die außen am Antennenkörper 452 bzw. als Durchkontaktierung zu Leiterbahnen und Bauteilen 458 eines Auswerte-Teils 449 der Schaltung 447 führen. Im Bereich der Ausnehmung 434 kann auch ein mehrlagiger Aufbau für entsprechende Leiterbahnen und Verbindungsleitungen für die Bauteile 458 vorgesehen sein. Insgesamt bildet der Antennenkörper 452 eine Trägerstruktur für die Schaltung 447.

## Patentansprüche

1. Positionsmessvorrichtung zur Bestimmung einer Position eines in einer Leitungsstruktur (45; 445) angeordneten Messobjekts (46; 446) anhand von Mikrowellen, mit einer elektrischen Schaltung (47; 147; 247; 347; 447) zum Erzeugen und/oder Empfangen der Mikrowellen und mit einer Mikrowellen-Antennenanordnung (43; 143; 243; 343; 443) zum Senden und/oder Empfangen der Mikrowellen, **dadurch gekennzeichnet, dass** sie einen dielektrischen Antennenkörper (52; 152; 252; 352; 452) mit einer ersten elektrisch leitfähigen Polfläche (86; 286; 386; 486) und einer von der ersten Polfläche (86; 286; 386; 486) elektrisch isolierten und elektrisch leitfähigen zweiten Polfläche (87; 287; 387; 487) zur Übertragung von Mikrowellen aufweist, dass der Antennenkörper (52; 152; 252; 352; 452) einen Bestandteil der Mikrowellen-Antennenanordnung (43; 143; 243; 343; 443) bildet, und dass zumindest Teile der elektrischen Schaltung (47; 147; 247; 347; 447) auf dem Antennenkörper angeordnet sind.

2. Positionsmessvorrichtung nach Anspruch 1, **dadurch gekennzeichnet, dass** die elektrische Schaltung (47; 147;-247; 347; 447) eine mit der ersten Polfläche (86; 286; 386; 486) verbundene erste Hochfrequenz-Leiterstruktur (96) und eine mit der zweiten Polfläche (87; 287; 387; 487) verbundene zweite Hochfrequenz-Leiterstruktur (95) zum Erzeugen und/oder Empfangen der Mikrowellen aufweist, und dass die erste und die zweite Leiterstruktur koplanar oder in einer Mikrostrip-Anordnung relativ zueinander angeordnet sind.

3. Positionsmessvorrichtung nach einem der vorhergehenden Ansprüche, **dadurch gekennzeichnet, dass** die Schaltung (47; 147; 247; 347; 447) eine Auswerteeinrichtung (49; 149; 249; 349; 449) zur Ermittlung von Positionswerten anhand der Mikrowellen und/oder eine Sendeeinrichtung, insbesondere eine Busankopplungseinrichtung, zur Übermittlung von Positionswerten umfasst.

4. Positionsmessvorrichtung nach einem der vorhergehenden Ansprüche, **dadurch gekennzeichnet, dass** die Schaltung (47; 147; 247; 347; 447) Bauelemente aufweist, die an den Antennenkörper (52; 152; 252; 352; 452) angelötet und/oder gebondet sind.

5. Positionsmessvorrichtung nach einem der vorhergehenden Ansprüche, **dadurch gekennzeichnet, dass** der Antennenkörper (52; 152; 252; 352; 452) insbesondere im Bereich der Schaltung (47; 147; 247; 347; 447) einen mehrlagigen Aufbau hat.

6. Positionsmessvorrichtung nach einem der vorhergehenden Ansprüche, **dadurch gekennzeichnet, dass** der Antennenkörper (52; 152; 252; 352; 452) zumindest teilweise eine zylindrische und/oder plattenartige Gestalt aufweist.

7. Positionsmessvorrichtung nach einem der vorhergehenden Ansprüche, **dadurch gekennzeichnet, dass** der Antennenkörper (52; 152; 252; 352; 452) zumindest teilweise als ein MID-Leiterkörper ausgestaltet ist.

8. Positionsmessvorrichtung nach einem der vorhergehenden Ansprüche, **dadurch gekennzeichnet, dass** die erste und/oder die zweite Polfläche (87; 287; 387; 487) zum Abstrahlen der Mikrowellen in die Leitungsstruktur (45; 445) und/oder Empfang aus der Leitungsstruktur (45; 445) vorgesehen sind.

9. Positionsmessvorrichtung nach einem der vorhergehenden Ansprüche, **dadurch gekennzeichnet, dass** die erste Polfläche (86; 286; 386; 486) zumindest teilweise an einer zur Sende- und/oder Empfangsrichtung der Mikrowellen-Antennenanordnung (43; 143; 243; 343; 443) hin orientierten Stirnseite des Antennenkörpers (52; 152; 252; 352; 452) und die zweite Polfläche (87; 287; 387; 487) an einem Umfang des Antennenkörpers (52; 152; 252; 352; 452) angeordnet sind.

10. Positionsmessvorrichtung nach einem der vorhergehenden Ansprüche, **dadurch gekennzeichnet, dass** zwischen der ersten und der zweiten Polfläche (87; 287; 387; 487) abschnittsweise im wesentlichen konstante, insbesondere radial konstante, Abstände vorhanden sind.

11. Positionsmessvorrichtung nach einem der vorhergehenden Ansprüche, **dadurch gekennzeichnet, dass** die erste und die zweite Polfläche (87; 287; 387; 487) abschnittsweise zueinander konzentrisch sind.

12. Positionsmessvorrichtung nach einem der vorhergehenden Ansprüche, **dadurch gekennzeichnet, dass** der Antennenkörper (52; 152; 252; 352; 452) eine Halterung für einen Abstrahlkörper (54; 454) der Mikrowellen-Antennenanordnung (43; 143; 243; 343; 443) bildet.

13. Positionsmessvorrichtung nach Anspruch 12, **dadurch gekennzeichnet, dass** der Abstrahlkörper (54; 454) im wesentlichen aus Metall besteht.

14. Positionsmessvorrichtung nach Anspruch 12, **dadurch gekennzeichnet, dass** der Abstrahlkörper (54; 454) ein dielektrischer Körper ist, der mit einer elektrisch leitfähigen Beschichtung zur Bildung einer Polfläche der Mikrowellen-Antennenanordnung (43; 143; 243; 343; 443) versehen ist.

15. Positionsmessvorrichtung nach einem der vorhergehenden Ansprüche, **dadurch gekennzeichnet, dass** die erste und/oder die zweite Polfläche (87; 287; 387; 487) durch eine elektrisch leitfähige Beschichtung gebildet sind.

16. Positionsmessvorrichtung nach einem der vorhergehenden Ansprüche, **dadurch gekennzeichnet, dass** die erste und/oder die zweite Polfläche (87; 287; 387; 487) durch ein physikalisches und/oder chemisches Bedampfungsverfahren und/oder durch Galvanisieren und/oder durch Laserbeschichtung und/oder durch thermisches Beschichten hergestellt sind.

17. Positionsmessvorrichtung nach einem der vorhergehenden Ansprüche, **dadurch gekennzeichnet, dass** die erste und/oder die zweite Polfläche (87; 287; 387; 487) mit der Leitungsstruktur (45; 445) elektrisch verbunden oder verbindbar ist.

18. Positionsmessvorrichtung nach einem der vorhergehenden Ansprüche, **dadurch gekennzeichnet, dass** der Antennenkörper (52; 152; 252; 352; 452) eine Befestigungseinrichtung zur Befestigung an der Leitungsstruktur (45; 445) aufweist.

19. Positionsmessvorrichtung nach einem der vorhergehenden Ansprüche, **dadurch gekennzeichnet,** die erste und/oder die zweite Polfläche (87; 287; 387; 487) zur Umgebung hin zumindest teilweise mit einer elektrischen Isolationsschicht (334) versehen sind.

20. Positionsmessvorrichtung nach einem der vorhergehenden Ansprüche, **dadurch gekennzeichnet, dass** ein Abschnitt des Antennenkörpers (52; 152; 252; 352; 452) als ein Koaxialleiter (94; 294; 394) ausgestaltet ist.

21. Positionsmessvorrichtung nach Anspruch 20, **dadurch gekennzeichnet, dass** die elektrische Schaltung (47; 147; 247; 347; 447) zumindest teilweise an der Außenseite des Koaxialleiter-Abschnitts (94; 294; 394) des Antennenkörpers (52; 152; 252; 352; 452) angeordnet ist.

22. Positionsmessvorrichtung nach Anspruch 20 oder 21, **dadurch gekennzeichnet, dass** die elektrische Schaltung (47; 147; 247; 347; 447) zumindest teilweise an einer insbesondere plattenartigen, an einer Stirnseite des Koaxialleiter-Abschnitts (94; 294; 394) des Antennenkörpers (52; 152; 252; 352; 452) angeordneten Trägerstruktur (50; 150; 250; 350) des Antennenkörpers angeordnet ist.

23. Positionsmessvorrichtung nach einem der vorhergehenden Ansprüche, **dadurch gekennzeichnet, dass** sie einen Bestandteil einer Aktorvorrichtung (11; 111), insbesondere eines elektrischen und/oder fluidtechnischen Antriebs bildet, und dass das Messobjekt (46; 446) ein Aktorglied der Aktorvorrichtung ist.

24. Positionsmessvorrichtung nach einem der Ansprüche 1 bis 22, **dadurch gekennzeichnet, dass** sie einen Bestandteil eines fluidtechnischen, insbesondere pneumatischen, Wartungsgeräts (400) bildet, und dass sie zur Mengenmessung eines Additivs für das Fluid und/oder eines Ausscheidungsproduktes aus dem Fluid in einem Aufnahmeraum des Wartungsgeräts ausgestaltet ist.

25. Positionsmessvorrichtung nach einem der Ansprüche 1 bis 22, **dadurch gekennzeichnet, dass** sie einen Bestandteil eines Fluidventils, insbesondere eines pneumatischen ventils, bildet, und dass das Messobjekt (46; 446) ein Ventilglied des Fluidventils ist.

## Claims

1. Position measuring device for determining a distance between a measuring object (46; 446) located in a line structure (45; 445) by means of microwaves, with an electric circuit (47; 147; 247; 347; 447) for generating and/or receiving the microwaves and with a microwave aerial arrangement (43; 143; 243; 343; 443) for transmitting and/or receiving the microwaves, **characterised in that** it comprises a dielectric aerial body (52; 152; 252; 352; 452) with a first electrically conductive pole face (86; 286; 386; 486) and a second electrically conductive pole face (87; 287; 387; 487) electrically insulated from the first pole face (86; 286; 386; 486) for the transmission of microwaves, **in that** the aerial body (52; 152; 252; 352; 452) forms part of the microwave aerial arrangement (43; 143; 243; 343; 443), and **in that** at least parts of the electric circuit (47; 147; 247; 347; 447) are located on the aerial body.

2. Position measuring device according to claim 1, **characterised in that** the electric circuit (47; 147; 247; 347; 447) comprises a first high-frequency line structure (96) connected to the first pole face (86; 286; 386; 486) and a second high-frequency line structure (95) connected to the second pole face (87; 287; 387; 487) for generating and/or receiving the microwaves, and **in that** the first and second line structures are arranged coplanar or in a microstrip formation relative to one another.

3. Position measuring device according to any of the preceding claims, **characterised in that** the circuit (47; 147; 247; 347; 447) includes an evaluation device (49; 149; 249; 349; 449) for the determination of position values using the microwaves and/or a transmitting device, in particular a bus coupling device, for the transmission of position values.

4. Position measuring device according to any of the preceding claims, **characterised in that** the circuit (47; 147; 247; 347; 447) comprises components soldered and/or bonded to the aerial body (52; 152; 252; 352; 452).

5. Position measuring device according to any of the preceding claims, **characterised in that** the aerial body (52; 152; 252; 352; 452) has a multilayer structure, in particular in the region of the circuit (47; 147; 247; 347; 447).

6. Position measuring device according to any of the preceding claims, **characterised in that** the aerial body (52; 152; 252; 352; 452) at least partially has a cylindrical and/or plate shape.

7. Position measuring device according to any of the preceding claims, **characterised in that** the aerial body (52; 152; 252; 352; 452) is at least partially designed as an MID conductor body.

8. Position measuring device according to any of the preceding claims, **characterised in that** the first and/or the second pole face (87; 287; 387; 487) are/is provided for emitting the microwaves into the line structure (45; 445) and/or for receiving them from the line structure (45; 445).

9. Position measuring device according to any of the preceding claims, **characterised in that** the first pole face (86; 286; 386; 486) is at least partially located at an end face of the aerial body (52; 152; 252; 352; 452) oriented towards the transmitting and/or receiving device of the microwave aerial arrangement (43; 143; 243; 343; 443) and the second pole face (87; 287; 387; 487) is located at a circumference of the aerial body (52; 152; 252; 352; 452).

10. Position measuring device according to any of the preceding claims, **characterised in that** there are substantially constant, in particular radially constant, distances between sections of the first and the second pole face (87; 287; 387; 487).

11. Position measuring device according to any of the preceding claims, **characterised in that** sections of the first and the second pole face (87; 287; 387; 487) are concentric relative to one another.

12. Position measuring device according to any of the preceding claims, **characterised in that** the aerial body (52; 152; 252; 352; 452) forms a support for an emitting body (54; 454) of the microwave aerial arrangement (43; 143; 243; 343; 443).

13. Position measuring device according to claim 12, **characterised in that** the emitting body (54; 454) is substantially made of metal.

14. Position measuring device according to claim 12, **characterised in that** the emitting body (54; 454) is a dielectric body provided with an electrically conductive coating for the formation of a pole face of the microwave aerial arrangement (43; 143; 243; 343; 443).

15. Position measuring device according to any of the preceding claims, **characterised in that** the first and/or the second pole face (87; 287; 387; 487) are/is represented by an electrically conductive coating.

16. Position measuring device according to any of the preceding claims, **characterised in that** the first and/or the second pole face (87; 287; 387; 487) are/is produced using a physical and/or chemical vapour deposition process and/or by means of electroplating and/or laser coating and/or thermal coating.

17. Position measuring device according to any of the preceding claims, **characterised in that** the first and/or the second pole face (87; 287; 387; 487) are/is electrically connected or connectable to the line structure (45; 445).

18. Position measuring device according to any of the preceding claims, **characterised in that** the aerial body (52; 152; 252; 352; 452) comprises a mounting device for securing to the line structure (45; 445).

19. Position measuring device according to any of the preceding claims, **characterised in that** the first and/or the second pole face (87; 287; 387; 487) are/is at least partially provided with an electric insulation layer (334) against the environment.

20. Position measuring device according to any of the preceding claims, **characterised in that** a section of the aerial body (52; 152; 252; 352; 452) is designed as a coaxial conductor (94; 294; 394).

21. Position measuring device according to claim 20, **characterised in that** the electric circuit (47; 147; 247; 347; 447) is at least partially located on the outside of the coaxial conductor section (94; 294; 394) of the aerial body (52; 152; 252; 352; 452).

22. Position measuring device according to claim 20 or 21, **characterised in that** the electric circuit (47; 147; 247; 347; 447) is at least partially located on an in particular plate-like support structure (50; 150; 250; 350) of the aerial body located at an end face of the coaxial conductor section (94; 294; 394) of the aerial body (52; 152; 252; 352; 452).

23. Position measuring device according to any of the preceding claims, **characterised in that** it forms part of an actuator device (11; 111), in particular of an electric and/or fluidic drive, and **in that** the measuring object (46; 446) is an actuator element of the actuator device.

24. Position measuring device according to any of claims 1 to 22, **characterised in that** it forms part of a fluidic, in particular pneumatic, service unit (400), and **in that** it is designed for the quantitative measurement of an additive for the fluid and/or of a separation product from the fluid in a locating chamber of the service unit.

25. Position measuring device according to any of claims 1 to 22, **characterised in that** it forms part of a fluid valve, in particular of a pneumatic valve, and **in that** the measuring object (46; 446) is a valve member of the fluid valve.

## Revendications

1. Dispositif de mesure de position pour déterminer une position d'un objet à mesurer (46 ; 446) disposé dans une structure conductrice (45 ; 445) à l'aide de micro-ondes, comprenant un circuit électrique (47 ; 147 ; 247 ; 347 ; 447) pour générer et/ou recevoir les micro-ondes et un dispositif d'antenne à micro-ondes (43; 143; 243; 343; 443) pour l'envoi et/ou la réception des micro-ondes, **caractérisé en ce qu'**il présente un corps d'antenne (52 ; 152 ; 252 ; 352 ; 452) diélectrique avec une première surface polaire (86 ; 286 ; 386 ; 486) électroconductrice et une seconde surface polaire (87 ; 287 ; 387 ; 487) isolée électriquement par rapport à la première surface polaire (86 ; 286 ; 386 ; 486) et électroconductrice pour la transmission de micro-ondes, **en ce que** le corps d'antenne (52 ; 152 ; 252 ; 352 ; 452) forme un composant de l'agencement d'antenne à micro-ondes (43 ; 143 ; 243 ; 343 ; 443), et **en ce qu'**au moins des parties du circuit électrique (47 ; 147 ; 247 ; 347 ; 447) sont disposées sur le corps d'antenne.

2. Dispositif de mesure de position selon la revendication 1, **caractérisé en ce que** le circuit électrique (47 ; 147 ; 247 ; 347 ; 447) présente une première structure de conducteur à haute fréquence (96) reliée à la première surface polaire (86 ; 286 ; 386 ; 486) et une seconde structure de conducteur à haute fréquence (95) reliée à la seconde surface polaire (87 ; 287 ; 387 ; 487) pour la production et/ou la réception des micro-ondes, et **en ce que** la première et la seconde structures de conducteur sont disposées de façon coplanaire ou dans un agencement de microstrip l'une par rapport à l'autre.

3. Dispositif de mesure de position selon l'une des revendications précédentes, **caractérisé en ce que** le circuit (47 ; 147 ; 247 ; 347 ; 447) comporte un dispositif d'analyse (49 ; 149 ; 249 ; 349 ; 449) pour la détermination de valeurs de position à l'aide des micro-ondes et/ou un dispositif d'émission, en particulier un dispositif de couplage de bus pour la transmission de valeurs de position.

4. Dispositif de mesure de position selon l'une des revendications précédentes, **caractérisé en ce que** le circuit (47 ; 147 ; 247 ; 347 ; 447) présente des composants qui sont rattachés par brasage et/ou par bonding au corps d'antenne (52 ; 152 ; 252 ; 352 ; 452).

5. Dispositif de mesure de position selon l'une des revendications précédentes, **caractérisé en ce que** le corps d'antenne (52 ; 152 ; 252 ; 352 ; 452) possède une structure multicouches en particulier dans la zone du circuit (47 ; 147 ; 247 ; 347 ; 447).

6. Dispositif de mesure de position selon l'une des revendications précédentes, **caractérisé en ce que** le corps d'antenne (52 ; 152 ; 252 ; 352 ; 452) présente au moins en partie une allure cylindrique et/ou en forme de plaque.

7. Dispositif de mesure de position selon l'une des revendications précédentes, **caractérisé en ce que** le corps d'antenne (52 ; 152 ; 252 ; 352 ; 452) est conçu au moins en partie sous forme d'un corps conducteur MID.

8. Dispositif de mesure de position selon l'une des revendications précédentes, **caractérisé en ce que** la première et/ou la seconde surfaces polaires (87 ; 287 ; 387 ; 487) sont prévues pour la diffusion des micro-ondes dans la structure conductrice (45 ; 445) et/ou la réception à partir de la structure conductrice (45 ; 445).

9. Dispositif de mesure de position selon l'une des revendications précédentes, **caractérisé en ce que** la première surface polaire (86 ; 286 ; 386 ; 486) est disposée au moins en partie sur un côté avant, orienté en direction du dispositif d'émission et/ou de réception de l'agencement d'antenne à micro-ondes (43 ; 143 ; 243 ; 343 ; 443), du corps d'antenne (52, 152 ; 252 ; 352 ; 452) et la seconde surface polaire (87 ; 587 ; 387 ; 487) est disposée sur un pourtour du corps d'antenne (52 ; 152 ; 252 ; 352 ; 452).

10. Dispositif de mesure de position selon l'une des revendications précédentes, **caractérisé en ce que** des espacements sensiblement constants, en particulier radialement constants, sont présents par endroits entre la première et la seconde surfaces polaires (87 ; 287 ; 387 ; 487).

11. Dispositif de mesure de position selon l'une des revendications précédentes, **caractérisé en ce que** la première et la seconde surfaces polaires (87 ; 287 ; 387 ; 487) sont concentriques par endroits l'une par rapport à l'autre.

12. Dispositif de mesure de position selon l'une des revendications précédentes, **caractérisé en ce que** le corps d'antenne (52 ; 152 ; 252 ; 352 ; 452) forme une fixation pour un corps de diffusion (54 ; 454) de l'agencement d'antenne à micro-ondes (43 ; 143 ; 243 ; 343 ; 443).

13. Dispositif de mesure de position selon la revendication 12, **caractérisé en ce que** le corps de diffusion (54 ; 454) est principalement en métal.

14. Dispositif de mesure de position selon la revendication 12, **caractérisé en ce que** le corps de diffusion (54 ; 454) est un corps diélectrique qui est doté d'un revêtement électroconducteur pour former une surface polaire de l'agencement d'antenne à micro-ondes (43 ; 143 ; 243 ; 343 ; 443).

15. Dispositif de mesure de position selon l'une des revendications précédentes, **caractérisé en ce que** la première et/ou la seconde surfaces polaires (87 ; 287 ; 387 ; 487) sont formées par un revêtement électroconducteur.

16. Dispositif de mesure de position selon l'une des revendications précédentes, **caractérisé en ce que** la première et/ou la seconde surface(s) polaire(s) (87 ; 287 ; 387 ; 487) est/sont fabriquée(s) par un procédé de vaporisation physique et/ou chimique et/ou par galvanisation et/ou par revêtement au laser et/ou par revêtement thermique.

17. Dispositif de mesure de position selon l'une des revendications précédentes, **caractérisé en ce que** la première et/ou la seconde surface(s) polaire(s) (87 ; 287 ; 387; 487) est/sont reliée(s) électriquement ou peut/peuvent être reliée(s) électriquement à la structure conductrice (45 ; 445).

18. Dispositif de mesure de position selon l'une des revendications précédentes, **caractérisé en ce que** le corps d'antenne (52 ; 152 ; 252 ; 352 ; 452) présente un dispositif de fixation pour la fixation sur la structure conductrice (45 ; 445).

19. Dispositif de mesure de position selon l'une des revendications précédentes, **caractérisé en ce que** la première et/ou la seconde surfaces polaires (87 ; 287 ; 387 ; 487) sont dotées en direction de l'environnement au moins en partie d'une couche d'isolation électrique (334).

20. Dispositif de mesure de position selon l'une des revendications précédentes, **caractérisé en ce qu'**une partie du corps d'antenne (52 ; 152 ; 252 ; 352 ; 452) est conçue comme un conducteur coaxial (94 ; 294 ; 394).

21. Dispositif de mesure de position selon la revendication 20, **caractérisé en ce que** le circuit électrique (47 ; 147 ; 247 ; 347 ; 447) est disposé au moins en partie sur le côté extérieur de la partie conducteur coaxial (94; 294 ; 394) du corps d'antenne (52 ; 152 ; 252 ; 352 ; 452).

22. Dispositif de mesure de position selon la revendication 20 ou 21, **caractérisé en ce que** le circuit électrique (47 ; 147 ; 247 ; 347 ; 447) est disposé au moins en partie sur une structure porteuse (50 ; 150 ; 250 ; 350) du corps d'antenne qui est en particulier en forme de plaque et qui est disposée sur un côté avant de la partie conducteur coaxial (94 ; 294 ; 394) du corps d'antenne (52 ; 152 ; 252 ; 352 ; 452).

23. Dispositif de mesure de position selon l'une des revendications précédentes, **caractérisé en ce qu'**il forme un composant d'un dispositif actionneur (11 ; 111), en particulier d'un entraînement électrique et/ou fluidique, et **en ce que** l'objet à mesurer (46 ; 446) est un élément actionneur du dispositif actionneur.

24. Dispositif de mesure de position selon l'une des revendications 1 à 22, **caractérisé en ce qu'**il forme un composant d'un appareil de maintenance (400) fluidique, en particulier pneumatique, et **en ce qu'**il est conçu pour la mesure de quantités d'un additif pour le fluide et/ou d'un produit de séparation à partir du fluide dans un espace récepteur de l'appareil de maintenance.

25. Dispositif de mesure de position selon l'une des revendications 1 à 22, **caractérisé en ce qu'**il forme un composant d'une vanne à fluide, en particulier d'une vanne pneumatique, et **en ce que** l'objet à mesurer (46 ; 446) est un élément de vanne de la vanne à fluide.
